# FASCICULE DE BREVET EUROPEEN

(11) **EP 0 345 150 B1**
(45) Date de publication et mention de la délivrance du brevet: **20.01.1993**
(21) Numéro de dépôt: 89401479.4
(22) Date de dépôt: 30.05.1989
(51) Int. Cl.: H02K 29/10, H02K 29/08

(54) **Moteur électrique à commutation électronique, notamment pour l'entrainement d'une machine de déplacement d'un fluide, en particulier un sèche-cheveux, équipée d'un tel moteur**
Elektrischer Motor mit elektronischer Kommutation, besonders für den Antrieb einer Fluidumverdrängermaschine, insbesondere eines mit einem solchen Motor ausgerüsteten Haartrockners
Electric motor with electronic commutation, particularly for driving a fluid displacement machine, in particular a hair dryer equipped with such a motor

(30) Priorité: 03.06.1988 FR 8807436
(43) Date de publication de la demande: 06.12.1989
(73) Titulaire: SOCIETE DE VENTILATION ET D'ELECTRICITE APPLIQUEES - VELECTA, F-41200 Romorantin (FR); GRADIENT, F-60206 Compiegne Cédex (FR)
(72) Inventeur: Kant, Michel, F-60150 Villers sur Coudun (FR); Biedinger, Jean-Marie, F-60138 Ciry Ourscamps (FR); Quessard, Roland, F-41200 Romorantin (FR); Galko, Jacques, F-37140 La Chapelle sur Loire (FR)
(74) Mandataire: Michardière, Bernard

(56) Documents cités:
- EP-A- 0 206 212
- FR-A- 2 267 650
- FR-A- 2 458 933
- US-A- 3 377 534
- US-A- 3 569 806
- US-A- 4 544 491
- US-A- 4 575 652
- US-A- 4 600 864

## Description

L'invention est relative à un moteur électrique à commutation électronique, du genre de ceux qui comportent :
- un rotor qui comprend des aimants permanents disposés de manière à déterminer un axe magnétique de rotor ;
- et un stator qui entoure le rotor et comporte des bobines destinées à être alimentées en courant continu et déterminant un axe magnétique de stator,

des moyens de commutation étant prévus pour inverser judicieusement le sens de circulation du courant dans les bobines afin que le couple électromagnétique exercé par le stator sur le rotor agisse toujours dans le même sens,
des moyens sensibles à la position du rotor étant prévus pour commander les susdits moyens de commutation et inverser le sens de circulation du courant dans les bobines,
des plots de réluctance étant en outre prévus dans le stator pour placer le rotor à l'arrêt dans une position où le démarrage du moteur sera assuré, ces plots de réluctance étant dissymétriques par rapport à l'axe magnétique de stator.

US-A-4 600 864 montre un moteur électrique de ce genre comprenant une bobine enroulée autour d'une branche rectiligne de l'armature du stator. Ce moteur est relativement encombrant et le circuit du flux magnétique dans le stator est relativement long.

US-A-4 575 652 concerne un moteur électrique à aimants permanents comportant un entrefer à réluctance non uniforme obtenue à l'aide de dents du stator dont les extrémités sont munies d'épanouissements périphériques continus. Les bobines sont enroulées autour de la partie des dents qui s'étend radialement. La réalisation du stator apparaît relativement compliquée, et la disposition des bobines ne conduit pas à un rendement optimal du moteur.

D'une manière générale, les moteurs à commutation électronique permettent de supprimer le collecteur et les balais des moteurs dits " universels ", mais font intervenir des composants relativement coûteux qui viennent augmenter sensiblement le prix du moteur.

En outre, il était communément admis, jusqu'à ce jour, que le moteur à commutation électronique, à plots de réluctance, ne pouvait fonctionner correctement qu'à des vitesses de rotation relativement basses, par exemple de l'ordre de 2000 tours/minute. On estimait qu'à des vitesses plus élevées, notamment supérieures à 5000 tours/minute, il n'était plus possible de faire fonctionner correctement un tel moteur à commutation électronique, en raison de l'importance prise par l'effet antagoniste du couple de réluctance à ces vitesses.

L'invention concerne plus particulièrement un moteur à commutation électronique dans lequel les bobines du stator sont reliées en série, et sont en nombre réduit, en particulier égal à quatre, tandis que les moyens de commutation comprennent un nombre réduit de transistors, en particulier quatre transistors formant un pont double.

L'invention a pour but, surtout, de fournir un moteur électrique à commutation électronique, du genre défini précédemment, capable de tourner à des vitesses aussi élevées que celles d'un moteur universel, avec un bon rendement, sous un encombrement réduit pour une puissance donnée, et qui reste de construction simple et économique.

Selon l'invention, un moteur électrique à commutation électronique du genre défini précédemment est caractérisé par le fait que
- le stator comporte un nombre pair d'encoches séparées par des dents régulièrement réparties sur toute la périphérie intérieure du stator,
- les plots de réluctance sont formés par deux groupes diamétralement opposés de dents et d'encoches, les dents qui n'appartiennent pas aux plots de réluctance ayant une longueur plus faible que la longueur des dents appartenant aux plots de réluctance,
- les bobines du stator sont logées pour partie dans des encoches des plots de réluctance et, pour l'autre partie, dans des encoches n'appartenant pas aux plots de réluctance, de sorte que les bobines de stator soient placées au voisinage du plan diamétral orthogonal à l'axe magnétique du stator, ce qui permet d'améliorer le coefficient de bobinage.

La dissymétrie des plots de réluctance par rapport à l'axe magnétique du stator contribue à réduire sensiblement l'effet de freinage du couple de réluctance et à permettre la rotation à vitesse élevée avec un couple satisfaisant ; l'amélioration du coefficient de bobinage permet d'améliorer le rendement du moteur.

De préférence, l'axe des plots de réluctance est décalé de 45° par rapport à l'axe magnétique des bobines du stator.

Pour un diamètre intérieur de stator d'environ 20 mm et une hauteur globale des dents d'environ 7,7 mm, la différence de longueur entre les dents des plots de réluctance et celles qui n'appartiennent pas à ces plots est d'environ trois dixièmes de millimètre.

Chaque plot de réluctance peut avoir une étendue angulaire d'environ 10̸0̸°.

Le stator peut comporter seize encoches et seize dents, les plots de réluctance diamétralement opposés comprenant chacun cinq dents et quatre encoches, tandis que les six dents restantes forment deux groupes de trois dents, diamétralement opposés, ayant une longueur réduite, deux bobines étant logées dans deux encoches des plots de réluctance situées vers une extrémité angulaire de ces plots, tandis que les deux autres bobines du stator sont logées dans les deux encoches immédiatement voisines, qui n'appartiennent pas aux plots de réluctance.

Pour une longueur axiale suffisante du stator, notamment pour une longueur supérieure à 20̸ mm, les encoches du stator sont, de préférence, inclinées suivant un angle déterminé par rapport aux génératrices, de manière à réduire l'effet des harmoniques dentaires sur le couple électromagnétique.

Avantageusement, le rotor est équipé d'aimants à base de terres rares, notamment au cobalt-samarium. Ces aimants peuvent avoir la forme d'une tuile ronde constituée par un portion de cylindre, dont l'angle au centre est compris entre 110̸° et 140̸°C, et est notamment voisin de 125°.

Les moyens sensibles à la position du rotor peuvent comprendre, d'une part, un organe tel qu'un disque ou analogue, calé sur l'axe du rotor et comportant des plages de contraste différent, notamment une plage claire et une plage sombre, et d'autre part un capteur photo-électrique propre à recevoir un signal d'éclairement provenant des susdites plages et à produire un signal électrique utilisé pour la commande de l'inversion du sens du courant dans les bobines.

L'organe, disque ou analogue, peut comporter deux secteurs sombres dont les extrémités arrière, suivant le sens de rotation du rotor, sont diamétralement opposées et calées angulairement, de même que le capteur, pour correspondre aux instants de commutation souhaités.

Avantageusement, un secteur sombre s'étend sur plus de 90̸° et moins de 180̸°C, tandis que l'autre secteur sombre s'étend sur moins de 90̸°, les secteurs clairs s'étendant entre les secteurs sombres.

Un circuit logique approprié est prévu pour commander le sens convenable du courant dans les bobines du stator afin d'obtenir la rotation du rotor toujours dans le sens souhaité, selon qu'un secteur sombre ou clair est vu par le capteur alors que le moteur est à l'arrêt.

Généralement, le capteur photo-électrique comprend un émetteur, notamment en rayonnement infra-rouge.

En variante, les moyens sensibles à la position du rotor comprennent un capteur à effet Hall, propre à produire un signal électrique pour la commande de l'invention du sens du courant dans les bobines, en réponse au passage d'au moins un aimant porté par un organe, tel qu'un disque ou analogue, calé sur l'axe du rotor.

La vitesse de rotation d'un moteur à commutation électronique conforme à l'invention peut être de l'ordre de 130̸0̸0̸ tours/minute.

Une application particulièrement intéressante d'un tel moteur concerne l'entraînement de machines de déplacement de fluides, notamment gazeux, telles qu'une soufflante, un ventilateur ou en particulier un sèche-cheveux, dans lesquelles le démarrage du moteur s'effectue avec une charge pratiquement nulle (couple résistance au démarrage sensiblement nul).

L'invention est également relative à une machine de déplacement d'un fluide, notamment gazeux, et en particulier un sèche-cheveux ou séchoir à main, généralement portable, caractérisée par le fait qu'elle est équipée d'un moteur à commutation électronique tel que défini précédemment.

L'invention consiste, mises à part les dispositions exposées ci-dessus, en un certain nombre d'autres dispositions dont il sera plus explicitement question ci-après à propos d'un mode de réalisation particulier décrit avec référence aux dessins ci-annexés, mais qui n'est nullement limitatif.

La figure 1, de ces dessins, est un schéma simplifié d'un moteur à commutation électronique.

La figure 2 est une vue en élévation d'un moteur conforme à l'invention.

La figure 3 est une coupe du stator suivant la ligne III-III de la figure 2, cette coupe ayant subi une rotation de 90̸°.

La figure 4 illustre une variante de réalisation des dents et des encoches du stator.

La figure 5 est un schéma de la disposition des bobines du stator.

La figure 6 est un graphique pour la détermination du coefficient de bobinage.

La figure 7 est un graphique représentant les variations du couple électromagnétique représenté en trait mixte, du couple de réluctance représenté en tirets, et du couple résultant du moteur représenté en trait plein, en fonction de l'angle de rotation.

La figure 8 est une représentation schématique du rotor et d'un disque calé sur l'axe de ce rotor, ainsi que d'un capteur-émetteur photoélectrique associé à ce disque.

La figure 9, enfin, illustre une variante de réalisation dans laquelle le disque de la figure 8 est remplacé par un tambour.

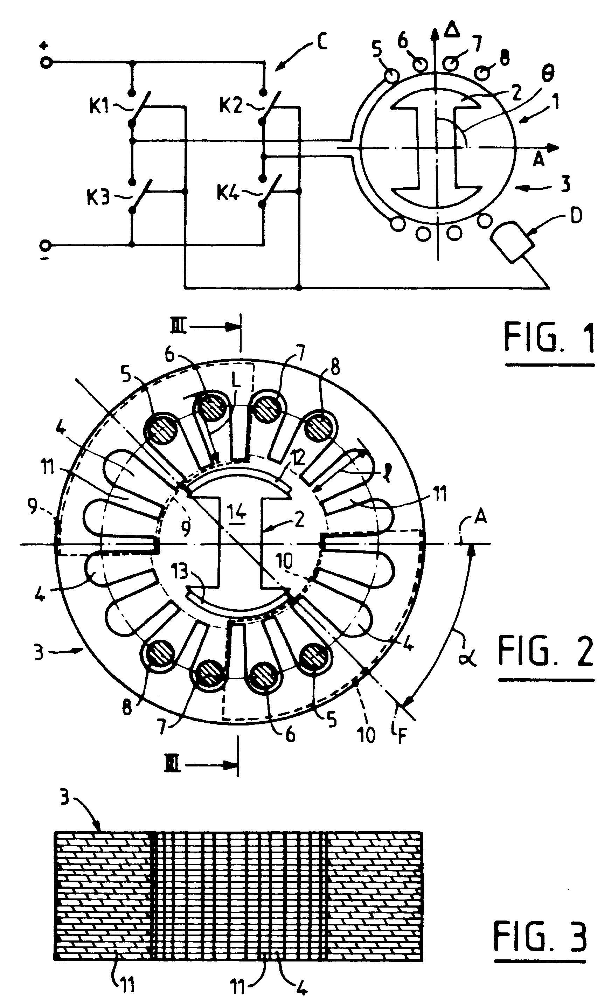

On se reportera, tout d'abord, à la figure 1 pour quelques rappels concernant les moteurs électriques à commutation électronique.

Un tel moteur 1 comporte un rotor 2 muni d'aimants permanents et un stator 3 qui entoure le rotor, et comporte des encoches, telles que 4 (figure 2) dans lesquelles sont logées des bobines telles que 5 destinées à être alimentées en courant continu et déterminant un axe magnétique A de stator.Pour la suite de la description on considérera que l'axe de stator A est horizontal et constitue l'axe de référence. Bien entendu, dans la pratique, cet axe peut être orienté différemment.

Dans l'exemple de réalisation considéré, le stator 2 comporte un seul enroulement pilotable, formé par quatre bobines 5, 6, 7 et 8 branchées en série.

Les aimants du rotor déterminent un axe magnétique de rotor Δ.

Lorsque l'angle ϑ entre l'axe magnétique A du stator et l'axe magnétique Δ du rotor est différent de zéro, à kπ près, un couple électromagnétique apparaît entre le stator et le rotor, ce couple ayant tendance à aligner l'axe magnétique du rotor sur l'axe du stator.

Pour un sens de circulation donné du courant dans les bobines du stator, le couple électromagnétique sera considéré comme positif pour ϑ variant de zéro à π.

Pour que le couple électromagnétique, s'exerçant sur le rotor, conserve le même sens lorsque ϑ varie de π à 2 π, on inverse le sens du courant dans l'enroulement du stator à l'aide de moyens de commutation C.

Une nouvelle inversion de la circulation du courant dans le stator doit se produire lorsque ϑ franchit la valeur 2 π.

En résumé, les inversions du courant sont commandées pour les valeurs de ϑ égales à zéro et π à 2k π près.

Le couple électromagnétiques obtenu a l'allure d'une sinusoïde redressée, c'est-à-dire dont les alternances négatives ont été remplacées par des alternances positives.

Les moyens de commutation C comprennent quatre transistors K1, K2, K3, K4, formant un double pont entre les bornes de la tension d'alimentation continue, les transistors étant représentés de façon schématique sous forme d'un simple interrupteur. Les interrupteurs K1, K3 sont branchés en série entre les bornes d'alimentation, de même que les interrupteurs K2 et K4. L'enroulement du stator est relié, par chacune de ses extrémités, à un point milieu compris entre deux interrupteurs.

La commande de ces interrupteurs est effectuée de telle sorte que K1, K4 soient fermés simultanément, tandis que K2, K3 sont ouverts ; pour ce branchement, le courant circule dans un sens dans l'enroulement du stator. Pour obtenir une circulation du courant en sens inverse, on assure la fermeture simultanée des interrupteurs K2, K3 et l'ouverture des interrupteurs K1, K4.

La commande des interrupteurs est assurée par des moyens D sensibles à la position angulaire du rotor 2. Ces moyens D, comme expliqué plus loin, comprennent avantageusement un capteur électrique combiné avec un organe, tel qu'un disque calé sur l'arbre du rotor, comportant des plages sombres et claires.

L'exemple de réalisation considéré est particulièrement simple, conformément au but recherché, puisque le stator comporte un seul enroulement et que les moyens de commutation comprennent seulement quatre transistors interrupteurs.

Dans un tel moteur, le couple électromagnétique s'annule tous les k π de telle sorte qui si le rotor 2 pouvait s'arrêter dans une telle position, le démarrage ultérieur du rotor ne pourrait se produire.

Pour empêcher un tel inconvénient, on prévoit, dans le stator, deux plots de réluctance pour placer le rotor 2 à l'arrêt dans une position où le démarrage du moteur sera assuré. Le phénomène de réluctance tend à faire placer le rotor 2 dans la position où l'entrefer est minimal. Ces plots font saillie radialement vers l'intérieur par rapport à la surface interne du stator, et le rotor 2 se positionne, à chaque arrêt, dans l'axe de ces plots.

La présence de tels plots de réluctance fait apparaître, lorsque le rotor 2 tourne, un couple de réluctance qui a une fréquence double de celle du couple électromagnétique, et qui vient se combiner avec lui.

Selon l'invention, pour optimiser le moteur électrique à commutation électronique et notamment pour améliorer son rendement et lui permettre de tourner à des vitesses élevées, on prévoit des plots de réluctance 9, 10̸ (voir figure 2) dissymétriques par rapport à l'axe A des bobines du stator, et qui comprennent des encoches 4 dont au moins une partie sert à loger au moins une bobine du stator 3, afin d'assurer l'obtention d'un coefficient de bobinage maximal.

En opérant de la sortie, on diminue les effets antagonistes du couple de réluctance sur le fonctionnement souhaité du moteur et on utilise au maximum ce couple de réluctance pour la rotation dans le sens souhaité ; en outre, grâce à l'utilisation d'encoches prévues dans les plots de réluctance, on peut placer les bobines au voisinage du plan diamétral orthogonal à l'axe magnétique A du stator, ce qui, comme expliqué plus en détail plus loin, améliore le coefficient de bobinage, et permet d'améliorer le rendement du moteur.

Comme visible sur la figure 2, l'axe F des plots de réluctance 9, 10̸ est décalé d'un angle α, avantageusement égal à 45°, par rapport à l'axe magnétique A des bobines du stator.

Le stator 3 comporte un nombre pair d'encoches 4 séparées par des dents 11, régulièrement réparties sur toute la périphérie intérieure du stator.

Les plots de réluctance 9, 10̸ sont formés par deux groupes diamétralement opposés de dents 11 et d'encoches 4. Les dents 11 qui n'appartiennent pas aux plots de réluctance ont une longueur l, selon la direction radiale, légèrement plus faible que la longueur L des dents appartenant aux plots 9 et 10̸.

Chaque plot de réluctance s'étend angulairement suivant un angle compris de préférence entre 80̸° et 120̸°, et avantageusement voisin de 10̸0̸°.

Dans l'exemple de réalisation représenté sur la figure 2, le stator 3 comporte seize encoches 4 et seize dents 11. Chaque plot de réluctance, comme visible sur la figure 2, est formé par l'ensemble de cinq dents 11 et de quatre encoches. Chaque groupe de cinq dents s'étend sensiblement suivant 10̸0̸°. Les deux groupes sont diamétralement opposés.

Les six dents restantes, de longueur l, forment deux autres groupes diamétralement opposés.

L'enroulement du stator, qui est formé de quatre bobines reliées en série, comprend deux bobines 5, 6 logées dans deux encoches des plots de réluctance situées vers une extrémité angulaire des plots, à savoir l'extrémité supérieure pour le plot 9 et l'extrémité inférieure pour le plot 10̸, tandis que les deux autres bobines 7 et 8 du stator sont logées dans les encoches 4 immédiatement voisines n'appartenant pas aux plots de réluctance.

Dans l'exemple plus précis d'une réalisation d'un moteur électrique pour séchoir à main, le diamètre intérieur du stator est de l'ordre de 20̸ mm, la hauteur L des dents 11 est d'environ 7,7 mm, et la différence de longueur L-l est de l'ordre de trois dixièmes de millimètre (0̸,3 mm), le diamètre extérieur du rotor étant de l'ordre de 19 mm.

Le coefficient de bobinage Kbob correspond au rapport de la somme vectorielle de toutes les forces électromotrices, engendrées par les différentes bobines, sur le produit N.E, N étant le nombre total des spires dans toutes les bobines reliées en série, et E l'amplitude de la force électromotrice produite par chaque bobine.

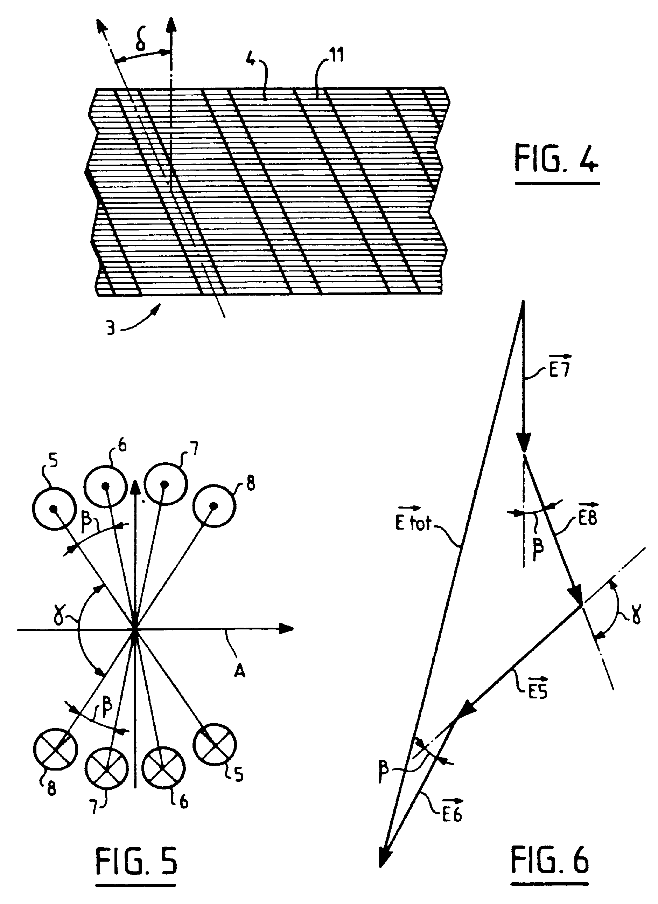

Les positions des quatre bobines ont été représentées sur la figure 5, avec les écarts angulaires correspondant au stator de la figure 2, l'axe magnétique A du stator étant l'axe horizontal sur cette figure 5. L'angle aigu β entre le plan moyen des bobines 5 et 6 est égal à celui existant entre le plan moyen des bobines 7 et 8. Dans l'exemple représenté sur la figure 2, ainsi que sur la figure 5, cet angle γ est égal à 22,5° (soit 360̸°/16). L'angle γ entre le plan moyen des bobines 5 et 8 est égal à 110̸° dans l'exemple de réalisation de la figure 2, cette valeur ayant été reportée sur la figure 5.

Le sens de circulation du courant dans les bobines est représenté schématiquement par une pointe de flèche (cercle avec point au centre), lorsque le courant va de l'arrière vers l'avant du plan de figure, et par un empennage de flèche (croix dans un cercle) pour le sens inverse.

La somme vectorielle de toutes les forces électromotrices produites par les différentes bobines est représentée sur la figure 6. Les bobines ayant toutes le même nombre de spires et le même diamètre, l'amplitude de la force électromotrice produite par chaque bobine est la même.

La force électromotrice produite par la bobine 7 est représentée, sur la figure 6, par le vecteur 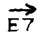 orienté verticalement de haut en bas. La force électromotrice de la bobine 8 est représentée par le vecteur 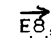 de même norme que 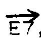 mais décalé angulairement de l'angle β , par rapport à 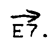 La force électromotrice engendrée par la bobine 5 est représentée par le vecteur 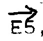 de même norme que les précédents, mais formant un angle (γ-π) par rapport au vecteur 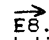 Enfin, la force électromotrice produite par la bobine 6 est représentée par le vecteur 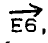 de même norme que les précédents, mais formant un angle avec le vecteur 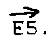 La force électromotrice résultante est représentée par le vecteur 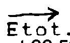 Dans l'exemple considéré, où l'angle ß vaut 22,5°, et l'angle γ, 110̸°, la norme du vecteur 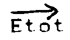 est égale à 3,6 fois la norme des vecteurs élémentaires. Le coefficient de bobinage est donc égal à Kbob = 3,6/4 = 0̸,9, ce qui correspond à un très bon coefficient de bobinage. Cela s'explique par le fait que les bobines, comme visible sur la figure 5, sont pratiquement diamétrales, c'est-à-dire que leur plan moyen est voisin du plan orthogonal à l'axe magnétique A du stator.

Lorsque l'épaisseur du stator, c'est-à-dire sa dimension suivant son axe, est relativement importante, par exemple supérieure à 20̸ mm, on peut prévoir, comme représenté partiellement sur la figure 4, des encoches 4 inclinées suivant un angle déterminé par rapport aux génératrices du cylindre formant la surface interne du stator, de manière à réduire l'effet des harmoniques dentaires sur le couple électromagnétique. Dans le cas de la figure 3, les encoches sont parallèles auxdites génératrices.

Pour obtenir l'inclinaison δ, on décale angulairement, de la quantité souhaitée, les tôles statoriques entre elles, l'empilage de ces tôles constituant le stator.

Le rotor 2 (voir figure 2) est équipé d'aimants 12, 13 à base de terres rares, notamment d'aimants au cobalt-samarium. Chaque aimant a la forme d'une tuile ronde constituée par une portion de cylindre dont l'angle au centre est compris entre 110̸° et 140̸°C, et est de préférence voisin de 125°. Le rayon de courbure de la surface extérieure des aimants est sensiblement égal au rayon de la surface interne du stator.

Les aimants 12 et 13 sont fixés, notamment par collage, sur les deux extrémités polaires diamétralement opposées, épanouies du noyau 14 en fer doux du rotor.

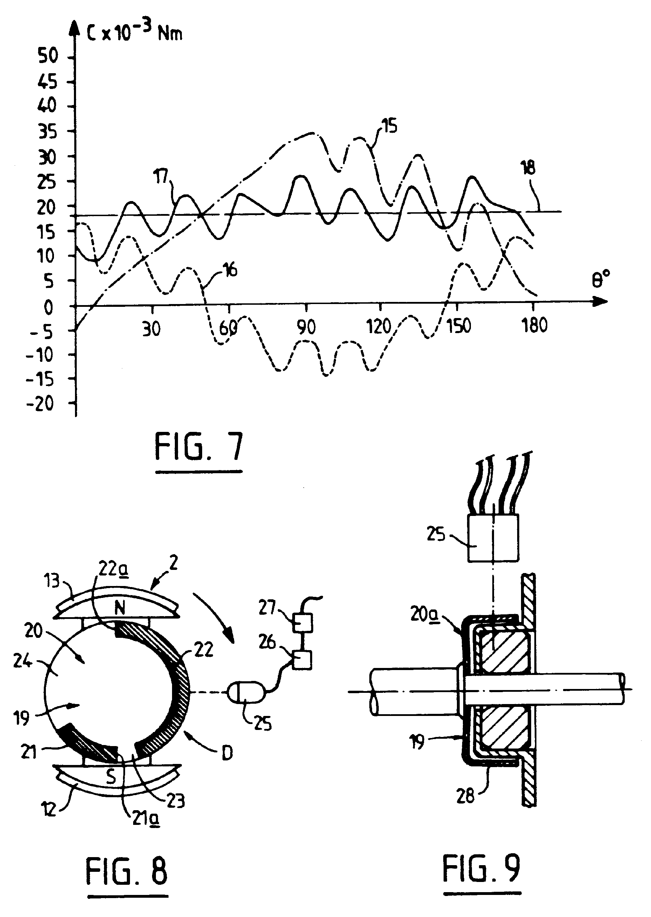

La figure 7 est une représentation du couple obtenu avec un moteur conforme à l'invention. Cette courbe est donnée sur une plage angulaire de 0̸° à 180̸°, c'est-à-dire sur une plage angulaire qui correspond à la période du couple.

Le couple est porté en ordonnées ; les graduations des ordonnées sont à multiplier par 10̸⁻³ Nm pour obtenir la valeur du couple dans l'exemple considéré (longueur du rotor 15 mm ; diamètre interne du stator 20̸ mm).

La courbe 15 en trait mixte représente les variations du couple électromagnétique produit par l'interaction du champ électromagnétique du stator et du champ magnétique du rotor.

La courbe 16, en tirets, représente les variations du couple de réluctance.

Les variations du couple total sont représentées par la courbe 17 en trait plein qui résulte de l'addition des deux courbes précédentes.

Il apparaît clairement, d'après cette figure 7, que le couple de réluctance est positif pour les plages angulaires où le couple électromagnétique est faible ou négatif, tandis que le couple de réluctance est négatif lorsque le couple électromagnétique est fortement positif. Ainsi, la combinaison du couple de réluctance et du couple électromagnétique selon l'invention conduit à un couple total dont les ondulations autour d'une valeur moyenne, correspondant à la droite 18 parallèle à l'axe des abscisses, sont relativement faibles, tandis que la valeur moyenne du couple correspondant à cette droite 18 est relativement élevée.

Le couple de réluctance reste excellent pour assurer le positionnement du rotor 2 à l'arrêt.

En se reportant à la figure 8, on peut voir que les moyens D sensibles à la position du rotor 2 comprennent un organe 19, tel qu'un disque 20̸ ou analogue, calé sur l'axe du rotor 2 et comportant des plages de contraste différent, notamment une plage claire et une plage sombre, en particulier une plage blanche et une plage noire. Dans l'exemple considéré, le disque 20̸ comporte deux plages ou secteurs sombres 21, 22, dont les extrémités arrière 21a, 22a, suivant le sens de rotation du rotor (sens des aiguilles d'une montre selon la figure 8) sont diamétralement opposées.

Le secteur 21 s'étend suivant un angle au plus égal à 90̸° ; dans le cas de la figure 8, l'angle du secteur 21 est de l'ordre de 60̸°. Le secteur 22 s'étend sur un angle supérieur à 90̸° et inférieur à 180̸° ; dans le cas de la figure 8, le secteur 22 s'étend sur un angle d'environ 160̸°.

Les deux secteurs sombres 21, 22 sont séparés par deux secteurs clairs 23, 24.

Les extrémités 21a et 22a sont calées angulairement de manière à correspondre aux instants de commutation souhaités, c'est-à-dire qu'elles sont alignées sur l'axe magnétique du rotor 2.

Les moyens D comprennent en outre un capteur photo-électrique 25 qui comporte un émetteur de rayonnement infra-rouge dirigé sur les secteurs du disque 20̸, et un récepteur sensible au rayonnement renvoyé par le secteur du disque frappé par le rayonnement.

Le faisceau de l'émetteur du capteur 25 est calé angulairement sur l'axe magnétique du stator. L'ensemble est agencé de telle sorte que, lorsque le rayonnement tombe sur un secteur sombre tel que 21, 22, le rayonnement renvoyé vers le récepteur du capteur 25 est insuffisant pour produire un signal en sortie de ce récepteur ; par contre, lorsque le rayonnement émis tombe sur un secteur clair tel que 23, 24, le récepteur du capteur 25 donne, sur sa sortie, un signal correspondant par exemple à un niveau "1"logique. Ce signal est utilisé pour commander l'inversion du sens du courant dans les bobines du stator.

De préférence, le capteur 25 est associé à des moyens de commande 26 propres à établir l'inversion du sens du courant dans les bobines seulement pour les fronts montants des signaux produits par le capteur 25. Un front montant correspond au passage du faisceau lumineux provenant de l'émetteur du capteur 25, d'un secteur sombre tel que 21 ou 22 à un secteur clair. Ces moyens 26 peuvent comprendre un circuit monostable déclenché uniquement par les fronts montants des signaux du capteur.

La position d'arrêt du rotor est déterminée à 180̸° près par les plots de réluctance.

Pour assurer le démarrage du rotor dans le sens de rotation souhaité, il faut faire circuler le courant dans les bobines 5, 6, 7 et 8 du stator dans un sens ou dans l'autre, selon la position du rotor à l'arrêt.

La combinaison de plages sombres 21 et 22 représentées sur la figure 8 permet de faire une différence selon que le pôle sud S du rotor se trouve en haut ou en bas à l'arrêt, selon la représentation de la figure 8. Lorsque le pôle sud se trouve en bas, comme représenté sur la figure 8, le capteur 25 voit, à l'arrêt, la plage sombre 22, par contre, si le pôle nord N se trouve en bas à l'arrêt, le capteur va voir le secteur clair 24.

Un circuit logique 27 est combiné avec le capteur 24 pour commander le sens convenable du courant dans les bobines 5 à 8, au démarrage du moteur, selon que le signal sur la sortie du capteur 25, lorsque le moteur est à l'arrêt, correspond à un "0̸" logique (cas où le capteur 25 voit le secteur 22 à l'arrêt) ou à un "1" logique (cas où le capteur 25 voit le secteur 24 à l'arrêt).

Le démarrage du moteur ayant été assuré dans le sens souhaité, les commutations s'effectuent ensuite normalement.

La figure 9 illustre une variante de réalisation dans laquelle l'organe 19 au lieu d'être constitué par un disque comme dans le cas de la figure 8, est constitué par un tambour 20̸a, calé sur l'axe du rotor ; les secteurs sombres et clairs sont prévus sur la surface extérieure de la paroi cylindrique 28 de ce tambour. Le capteur 25 est dirigé vers cette paroi 28 tout en en étant écarté radialement, comme représenté sur la figure.

L'agencement des secteurs sombres et clairs, et le fonctionnement de l'ensemble, sont semblables à ceux décrits à propos de la figure 8.

En variante, le disque 20̸ peut ne comporter que deux zones (ou secteurs), l'une noire ou sombre l'autre claire, au lieu des quatre secteurs 21 à 24 prévus sur la figure 8.

Deux transistors de puissance seulement, au lieu des quatre prévus sur la figure 1, peuvent être utilisés, en combinaison avec une source de tension à point milieu.

Le capteur optique peut être choisi de manière à permettre l'utilisation des fronts montant et descendant de son signal pour commander, successivement, la saturation de ces deux transistors de puissance.

Selon une autre variante, le capteur propre à commander les transistors, pour l'inversion de courant, est un capteur à effet Hall, dont la consommation est moins importante que celle d'un capteur optique et qui est insensible à la pollution. Au moins un aimant est fixé sur un disque solidaire du rotor, et le capteur à effet Hall bascule lorsque cet aimant passe devant lui.

L'invention permet d'obtenir un moteur à commutation électronique pouvant tourner à des vitesses élevées, notamment de l'ordre de 13 0̸0̸0̸ tours/minute, d'encombrement réduit pour une puissance donnée, particulièrement adapté à l'entraînement d'une machine pour le déplacement d'un fluide gazeux, et plus particulièrement encore à un sèche-cheveux portable, ou à poste fixe.

## Revendications

1. Moteur électrique à commutation électronique, comportant :
- un rotor (2) qui comprend des aimants permanents (12, 13) disposés de manière à déterminer un axe magnétique de rotor ;
- et un stator (3) qui entoure le rotor et comporte des bobines (5, 6, 7, 8) destinées à être alimentées en courant continu, et déterminant un axe magnétique (A) de stator,
des moyens de commutation (C) étant prévus pour inverser judicieusement le sens de circulation du courant dans les bobines afin que le couple électromagnétique exercé par le stator (3) sur le rotor (2) agisse toujours dans le même sens,
des moyens (D) sensibles à la position du rotor étant prévus pour commander les moyens de commutation (C) et inverser le sens de circulation du courant dans les bobines,
des plots de réluctance (9, 10) étant en outre prévus dans le stator (3) pour placer le rotor (2) à l'arrêt dans une position où le démarrage du moteur sera assuré, ces plots de réluctance étant dissymétriques par rapport à l'axe magnétique (A) de stator,
caractérisé par le fait que
- le stator (3) comporte un nombre pair d'encoches (4) séparées par des dents (11) régulièrement réparties sur toute la périphérie intérieure du stator (3),
- les plots de réluctance (9, 10) sont formés par deux groupes diamétralement opposés de dents et d'encoches, les dents qui n'appartiennent pas aux plots de réluctance ayant une longueur (l) plus faible que la longueur (L) des dents appartenant aux plots de réluctance,
- les bobines (5, 6, 7, 8) du stator sont logées pour partie (5, 6) dans des encoches des plots de réluctance (9, 10̸) et, pour l'autre partie, dans des encoches n'appartenant pas aux plots de réluctance, de sorte que les bobines de stator (5, 6, 7, 8) soient placées au voisinage du plan diamétral orthogonal à l'axe magnétique (A) du stator, ce qui permet d'améliorer le coefficient de bobinage (Kbob.)

2. Moteur électrique selon la revendication 1, caractérisé par le fait que les bobines (5, 6, 7, 8) du stator sont en nombre réduit, en particulier égal à quatre, et reliées en série, tandis que les moyens de commutation (C) comprennent un nombre réduit de transistors, en particulier quatre transistors (K1, K2, K3, K4) formant un pont double.

3. Moteur selon la revendication 1 ou 2, caractérisé par le fait que l'axe des plots de réluctance (9, 10̸) est décalé de 45° par rapport à l'axe magnétique (A) des bobines du stator (3).

4. Moteur selon la revendication 1, caractérisé par le fait que la longueur (l) des dents (11) qui n'appartiennent pas aux plots de réluctance (9, 10̸) est inférieure d'environ trois dixièmes de millimètre par rapport aux dents appartenant aux plots de réluctance, pour une hauteur globale (L) de dents d'environ 7, 7 millimètres, et un diamètre intérieur de stator (3) d'environ 20̸ millimètres, le diamètre extérieur du rotor (2) étant de l'ordre de 19 millimètres.

5. Moteur selon la revendication 3 ou 4, caractérisé par le fait que chaque plot de réluctance (9, 10̸) a une étendue angulaire d'environ 10̸0̸°.

6. Moteur selon l'une quelconque des revendications 3 à 5, caractérisé par le fait que le stator (3) comporte seize encoches (4) et seize dents (11), les plots de réluctance (9, 10̸) comprenant chacun cinq dents et quatre encoches et étant diamétralement opposés, les six dents restantes formant deux groupes également diamétralement opposés, et ayant une longueur (l) réduite, deux bobines (5, 6) étant logées dans deux encoches des plots de réluctance situées vers une extrémité angulaire de ces plots, tandis que les deux autres bobines (7, 8) du stator sont logées dans les deux encoches immédiatement suivantes.

7. Moteur selon l'une quelconque des revendications précédentes, caractérisé par le fait que les encoches du stator (3) sont inclinées suivant un angle déterminé (δ) par rapport aux génératrices, de manière à réduire l'effet des harmoniques dentaires sur le couple électromagnétique.

8. Moteur selon l'une quelconque des revendications précédentes, caractérisé par le fait que le rotor (2) est équipé d'aimants permanents (12, 13) à base de terres rares, en particulier d'aimants au cobalt-samarium.

9. Moteur selon la revendication 8, caractérisé par le fait que les aimants permanents (12, 13) ont la forme d'une tuile ronde dont l'angle au centre est compris entre 110̸° et 140̸°, et, en particulier, est voisin de 125°.

10. Moteur selon l'une quelconque des revendications précédentes, dans lequel les moyens (D) sensibles à la position du rotor (2) comprennent d'une part un organe (19) tel qu'un disque ou analogue, calé sur l'axe du rotor (2) et comportant des plages de contraste différent, notamment une plage claire et une plage sombre, et, d'autre part, un capteur (25) photo-électrique propre à recevoir un signal d'éclairement provenant des susdites plages (21, 22 ; 23, 24) et à produire un signal électrique utilisé pour la commande de l'inversion du sens du courant dans les bobines, caractérisé par le fait qu'il comprend des moyens de commande (26) propres à établir le sens de l'inversion du courant dans les bobiens (5, 6, 7, 8) du stator (3) seulement pour les fronts montants des signaux produits par le capteur, un front montant correspondant au passage d'un secteur sombre (21, 22) à un secteur clair (23, 24) devant le capteur (25).

11. Moteur selon la revendication 10̸, caractérisé par le fait que l'organe (19) comporte deux secteurs sombres (21, 22) dont les extrémités arrière, suivant le sens de rotation du rotor, sont diamétralement opposées et calées angulairement, de même que le capteur (25), pour correspondre aux instants de commutation souhaités.

12. Moteur selon la revendication 11, caractérisé par le fait qu'un secteur sombre (22) s'étend sur plus de 90̸° et moins de 180̸°, tandis que l'autre secteur sombre (21) s'étend sur moins de 90̸°, les secteurs clairs (23, 24) s'étendant entre les secteurs sombres.

13. Moteur selon la revendication 11 ou 12, caractérisé par le fait que, pour détecter la position d'arrêt du rotor (2) et déterminer le sens à donner au courant dans les bobines du stator (3) afin d'avoir toujours le même sens de rotation du rotor, un circuit logique (27) est prévu pour commander le sens convenable du courant dans les bobines de stator selon qu'un secteur sombre (22) ou clair (24) est vu par le capteur (25) alors que le moteur est à l'arrêt.

14. Moteur selon l'une quelconque des revendications précédentes, caractérisé par le fait que sa vitesse de rotation est de l'ordre de 130̸0̸0̸ tours/minute.

15. Application d'un moteur selon l'une quelconque des revendications précédentes à l'entraînement d'une machine de déplacement d'un fluide, en particulier gazeux, telle qu'un sèche-cheveux, une soufflante, un ventilateur, ou analogues.

16. Sèche-cheveux, en particulier portable, caractérisé par le fait qu'il est équipé d'un moteur selon l'une quelconque des revendications 1 à 14.

## Patentansprüche

1. Elektromotor mit elektronischer Schaltung, umfassend:
- einen Rotor (2), der Dauermagnete ( 12, 13) umfaßt, die so angeordnet sind, daß sie eine magnetische Rotorachse bestimmen;
- und einen Stator (3), der den Rotor umschließt und Spulen (5, 6, 7, 8) umfaßt, die dazu bestimmt sind, mit Gleichstrom versorgt zu werden, und eine magnetische Statorachse (A) bestimmen,
wobei Schaltmittel (C) für den richtigen Umkehr der Stromdurchflußrichtung durch die Spulen vorgesehen sind, damit das vom Stator (3) auf den Rotor (2) ausgeübte elektromagnetische Moment immer in derselben Richtung wirkt,
wobei für die Stellung des Rotors empfindliche Mittel (D) zum Steuern der Schaltmittel (C) und zum Umdrehen der Stromdurchflußrichtung durch die Spulen vorgesehen sind,
wobei außerdem Reluktanzkontakte (9, 10) im Stator (3) vorgesehen sind, um den Rotor (2) im Stillstand in eine Stellung zu bringen, in der das Starten des Motors gesichert ist, wobei diese Reluktanzkontakte bezüglich der magnetischen Statorachse (A) unsymmetrish sind,
dadurch gekennzeichnet, daß
- der Stator (3) eine gerade Zahl durch gleichmäßig über den ganzen Innenumkreis des Stators (3) verteilte Zähne getrennte Einkerbungen (4) umfaßt,
- die Reluktanzkontakte (9, 10) aus zwei diametral gegenüberliegenden Gruppen von Zähnen und Einkerbungen gebildet sind, wobei die nicht zu den Reluktanzkontakten gehörenden Zähne eine geringere Länge (l) als die Länge (L) der zu den Reluktanzkontakten gehörenden Zähne aufweisen,
- die Spulen (5, 6, 7, 8) des Stators, für einen Teil (5, 6), in Einkerbungen der Reluktanzkontakte (9, 10) und, für den anderen Teil, in nicht zu den Reluktanzkontakten gehörenden Einkerbungen untergebracht sind, sodaß die Statorspulen (5, 6, 7, 8) in der Nähe der zur magnetischen Statorachse (A) orthogonalen diametralen Ebene angeordnet sind, was es erlaubt, den Wicklungskoeffizienten (Kbob.) zu verbessern.

2. Elektromotor nach Anspruch 1, dadurch gekennzeichnet, daß die Anzahl der Spulen (5, 6, 7, 8) des Stators gering, insbesondere gleich vier, ist und sie reihenmäßig mit einander verbunden sind, während die Schaltmittel (C) eine geringe Anzahl Transistoren, insbesondere vier Transistoren (K1, K2, K3, K4), die eine Doppelbrücke bilden, umfassen.

3. Motor nach Anspruch 1 oder 2, dadurch gekennzeichnet, daß die Achse der Reluktanzkontakte (9, 10) bezüglich der magnetischen Achse (A) der Spulen des Stators (3) um 45° versetzt ist.

4. Motor nach Anspruch 1, dadurch gekennzeichnet, daß die Länge (l) der nicht zu den Reluktanzkontakten (9, 10) gehörenden Zähne (11) im Vergleich mit den zu den Reluktanzkontakten gehörenden Zähnen um etwa drei zehntel Millimeter kleiner ist, für eine Gesamthöhe (L) von ca. 7.7 Millimeter und einen Innendurchmesser des Stators (3) von ca. 29 Millimeter, wobei der Außendurchmesser des Rotors (2) ungefähr 19 Millimeter beträgt.

5. Motor nach Anspruch 3 oder 4, dadurch gekennzeichnet, daß jeder Reluktanzkontakt (9, 10) eine Winkelstreckung von ca. 100° aufweist.

6. Motor nach irgendeinem der Ansprüche 3 bis 5, dadurch gekennzeichnet, daß der Stator (3) sechzehn Einkerbungen (4) und sechzehn Zähne (11) umfaßt, wobei die Reluktanzkontakte (9, 10) je fünf Zähne und vier Einkerbungen umfassen und diametral gegenüberliegend sind, die übrigen sechs Zähne zwei ebenfalls diametral gegenüberliegende Gruppen bilden und eine geringere Länge (1) aufweisen, wobei zwei Spulen (5, 6) in zwei zu einem winkelförmigen Ende der Kontakte befindlichen Einkerbungen dieser Reluktanzkontakte untergebracht sind, während die anderen zwei Spulen (7, 8) des Stators in den zwei unmittelbar nächsten Einkerbungen angebracht sind.

7. Motor nach irgendeinem der vorgehenden Ansprüche, dadurch gekennzeichnet, daß die Einkerbungen des Stators (3) um einen bestimmten Winkel (δ) bezüglich der Zeugenden geneigt sind, sodaß die Wirkung der Zahnnebentöne auf das elektromagnetische Moment vermindert wird.

8. Motor nach irgendeinem der vorgehenden Ansprüche, dadurch gekennzeichnet, daß der Rotor (2) mit Seltenerden-Dauermagneten (12, 13), insbesondere Kobalt-Samarium-Magneten ausgerüstet ist.

9. Motor nach Anspruch 8, dadurch gekennzeichnet, daß die Dauermagnete ( 12, 13) die Gestalt eines runden Ziegels aufweisen, dessen Winkel in der Mitte zwischen 110 und 140° und, insbesondere, in der Nähe von 125° liegt.

10. Motor nach irgendeinem der vorgehenden Ansprüche, bei dem die für die Stellung des Rotors (2) empfindlichen Mittel (D), einerseits, ein Organ ( 19), wie eine Scheibe oder dergleichen, das an der Achse des Rotors (2) befestigt ist und Bereiche unterschiedlichen Kontrastes, nähmlich einen hellen Bereich und einen dunklen Bereich, und, andererseits, einen photoelektrischen Geber (25), der geeignet ist, ein von den oben erwähnten Bereichen (21, 22 ; 23, 24) kommendes Beleuchtungssignal aufzufangen und ein zum Steuern des Umkehrs der Stromdurchflußrichtung durch die Spulen verwendetes elektrisches Signal zu erzeugen, umfaßt, dadurch gekennzeichnet, daß er Steuermittel (26) umfaßt, die geeignet sind, die Umkehrrichtung des Stromdurchflußes durch die Spulen (5, 6, 7, 8) des Stators (3) nur für die steigenden Fronten der vom Geber erzeugten Signale festzulegen, wobei eine steigende Front dem Übergang von einem dunklen Bereich (21, 22) in einen hellen Bereich (23, 24) vor dem Geber (25) entspricht.

11. Motor nach Anspruch 10, dadurch gekennzeichnet, daß das Organ (19) zwei dunkle Bereiche (21, 22) umfaßt, deren Hinterenden der Rotordrehrichtung gemäß diametral gegenüberliegend und winklig festgesetzt sind, sowie der Geber (25), um den gewünschten Schaltzeiten zu entsprechen.

12. Motor nach Anspruch 11, dadurch gekennzeichnet, daß sich ein dunkler Bereich (22) über mehr als 90° und weniger als 180° ausstreckt, während sich der andere dunkle Bereich (21) über weniger als 90° ausstreckt, wobei sich die hellen Bereiche (23, 24) zwischen den dunklen Bereichen ausstrecken.

13. Motor nach Anspruch 11 oder 12, dadurch gekennzeichnet, daß zum Detektieren der Anhaltsstellung des Rotors (2) und zum Bestimmen der dem Strom in den Spulen des Stators (3) zu erteilenden Richtung, um immer die gleiche Drehrichtung des Rotors zu erhalten, eine logische Schaltung (27) vorgesehen ist, zum Steuern der richtigen Stromdurchflußrichtung durch die Spulen des Stators, je nachdem ein dunkler (22) oder heller Bereich (24) vom Geber gesehen wird, wenn der Motor stillsteht.

14. Motor nach irgendeinem der vorgehenden Ansprüche, dadurch gekennzeichnet, daß seine Drehgeschwindigkeit ungefähr 13000 Umdrehungen/Minute beträgt.

15. Anwendung eines Motors nach irgendeinem der vorgehenden Ansprüche für den Antrieb einer Maschine zur Beförderung eines, insbesondere gasförmigen, Mediums, wie eines Haartrockners, eines Gebläses, eines Ventilators oder dergleichen.

16. Haartrockner, insbesondere tragbarer Haartrockner, dadurch gekennzeichnet, daß er mit einem Motor nach irgendeinem der Ansprüche 1 bis 14 ausgerüstet ist.

## Claims

1. Electric motor with electronic switching, including:
- a rotor (2) which comprises permanent magnets (12, 13) arranged so as to define a magnetic rotor axis;
- and a stator (3) which surrounds the rotor and includes coils (5, 6, 7, 8) intended for being fed with direct current, and defining a magnetic stator axis (A),
switching means (C) being provided for to judiciously reverse the flow direction of the current through the coils, in order for the electromagnetlc torque exerted by the stator (3) onto the rotor (2) to act always in the same direction,
rotor-position sensitive means (D) being provided for to control the switching means (C) and reverse the flow direction of the current through the coils,
reluctance studs (9, 10) being furthermore provided for in the stator (3) to put the rotor (2), when stopped, into a position in which the starting of the motor will be ensured, these reluctance studs being dissymmetrical with respect to the magnetic stator axis (A),
characterized in that
- the stator (3) includes an even number of notches (4) separated by teeth (1) evenly distributed over the full inner periphery of the stator (3),
- the reluctance studs (9, 10) are formed by two diametrically opposed groups of teeth and notches, the teeth which do not belong to the reluctance studs having a length (l) smaller than the length (L) of the teeth belonging to the reluctance studs,
- the coils (5, 6, 7, 8) of the stator are accomodated, for one part (5, 6), in notches of the reluctance studs (9, 10) and, for the other part, in notches not belonging to the reluctance studs, so that the stator coils (5, 6, 7, 8) be placed in the vicinity of the diametrical plane orthogonal to the magnetic stator axis (A), which allows to improve the coiling coefficient (Kbob.).

2. Electric motor according to claim 1, characterized in that the number of coils (5, 6, 7, 8) of the stator is reduced, particularly equal to four, and that they are connected in series, while the switching means (C) comprise a small number of transistors, particularly four transistors (K1, K2, K3, K4) forming a double bridge.

3. Motor according to claim 1 or 2, characterized in that the axis of the reluctance studs (9, 10) is off-set by 45° with respect to the magnetic axis (A) of the coils of the stator (3).

4. Motor according to claim 1, characterized in that the length (l) of the teeth (11) which do not belong to the reluctance studs (9, 10) is smaller by about three tenth of a millimeter with respect to the teeth belonging to the reluctance studs, for a global tooth height (L) of about 7.7 millimeters and an inner diameter of the stator (3) of about 29 millimeters, the outer diameter of the rotor (2) being in the range of 19 millimeters.

5. Motor according to claim 3 or 4, characterized in that each reluctance stud (9, 10) has an angular extension of about 100°.

6. Motor according to any of claims 3 to 5, characterized in that the stator (3) includes sixteen notches (4) and sixteen teeth (11), the reluctance studs (9, 10) including each five teeth and four notches and being diametrically opposed, the remaining six teeth forming two groups also diametrically opposed and having a reduced length (l), two coils (5, 6) being accomodated in two notches of the reluctance studs located towards an angular end of these studs, while the other two coils (7, 8) of the stator are accomodated in the next two notches.

7. Motor according to any of the preceding claims, characterized in that the notches of the stator (3) are inclined at a determinate angle (δ) with respect to the generating lines, so as to reduce the effect of the dental harmonics onto the electromagnetic torque.

8. Motor according to any of the preceding claims, characterized in that the rotor (2) is provided with rare-earth-based permanent magnets ( 12, 13), particularly cobalt-samrium magnets.

9. Motor according to claim 8, characterized in that the permanent magnets ( 12, 13) have the shape of a round tile the angle in the centre of which lies between 110 and 140° and, particularly, is close to 125°.

10. Motor according to any of the preceding claims, wherein the means (D) sensitive to the position of the rotor (2) comprise, on the one hand, an organ ( 19), such as a disc or the like, fixed onto the axis of the rotor (2) and including different contrast areas, viz. a bright area and a dark area, and, on the other hand, a photoelectric receptor (25) capable of receiving an illumination signal proceeding from the above- mentioned areas (21, 22 ; 23, 24) and of generating an electric signal used for controlling the reversal of the current-flow direction through the coils, characterized in that it comprises control means (26) capable of establishing the direction of reversal of the current through the coils (5, 6, 7, 8) of the stator (3) only for the ascending fronts of the signals generated by the receptor, an ascending front corresponding to the transition from a dark sector (21, 22) to a bright sector (23, 24) in front of the receptor (25).

11. Motor according to claim 10, characterized in that the organ ( 19) includes two dark sectors (21, 22) the rear ends of which, according to the direction of rotation of the rotor, are diametrically opposed and angularly fixed, as well as the receptor (25), to coincide with the desired switching moments.

12. Motor according to claim 11, characterized in that one dark sector (22) extends over more than 90° and less than 180°, while the other dark sector (21) extends over less than 90°, the bright sectors (23, 24) extending between the dark sectors.

13. Motor according to claim 11 or 12, characterized in that for detecting the stopping position of the rotor (2) and determining the direction to be imparted to the current flow through the coils of the stator (3) in order to always have the same direction of rotation of the rotor, a logic circuit (27) is provided for to control the appropriate direction of current flow through the coils of the stator according to whether a dark (22) or bright sector (24) is seen by the receptor (25) while the motor stands still.

14. Motor according to any of the preceding claims, characterized in that its rotating speed is of about 13000 revolutions/minute.

15. Application of a motor according to any of the preceding claims to the driving of a machine for displacing a fluid, particularly a gaseous fluid, such as a hair drier, a blower, a fan or the like.

16. Hair drier, particularly a portable hair drier, characterized in that it is provided with a motor according to any of claims 1 to 14.
